# EUROPÄISCHE PATENTANMELDUNG

(11) **EP 0 993 151 A2**
(43) Veröffentlichungstag der Anmeldung: **12.04.2000**
(21) Anmeldenummer: 99440266.7
(22) Anmeldetag: 01.10.1999
(51) Int. Cl.: H04L 12/403, H04L 29/06

(54) **Verfahren zum Betreiben eines Systems, sowie ein System, eine Zentrale und ein Endgerät hierfür**

(30) Priorität: 08.10.1998 DE 19846273
(71) Anmelder: ALCATEL, 75008 Paris (FR)
(72) Erfinder: Wahl, Stefan, 71701 Schwieberdingen (DE); Banniza, Thomas Rolf, 71282 Hemmingen (DE)
(74) Vertreter: Brose, Gerhard, Dipl.-Ing.

(57) **Zusammenfassung**

Die Erfindung betrifft ein Verfahren zum Inbetriebnehmen und Betreiben eines Systems mit einer Zentrale und einer Vielzahl von über ein gemeinsames Medium von dieser Zentrale aus gleichzeitig zu betreibenden Endgeräten, bei dem jedes betriebsbereite Endgerät von der Zentrale aus regelmäßig auf einem Dienstkanal abgefragt wird, ob ein Verbindungswunsch vorliegt, bei dem bei Vorliegen eines Verbindungswunsches diesem Endgerät ein Übertragungskanal mit einer diesem Verbindungswunsch entsprechenden Übertragungskapazität zugewiesen wird und daß bei Beendigung der Verbindung die Übertragungskapazität für dieses Endgerät auf Null gesetzt wird, sowie ein System, eine Zentrale und ein Endgerät zur Durchführung dieses Verfahrens in einem solchen System.

## Beschreibung

Die Erfindung betrifft ein Verfahren zum Betreiben eines Systems mit einer Zentrale und einer Vielzahl von über ein gemeinsames Medium von dieser Zentrale aus gleichzeitig zu betreibenden Endgeräten nach dem Oberbegriff des Anspruchs 1, ein System mit einer Zentrale und einer Vielzahl von über ein gemeinsames Medium von dieser Zentrale aus gleichzeitig zu betreibenden Endgeräten nach dem Oberbegriff des Anspruchs 3, eine Zentrale für ein System mit einer Zentrale und einer Vielzahl von über ein gemeinsames Medium von dieser Zentrale aus gleichzeitig zu betreibenden Endgeräten nach dem Oberbegriff des Anspruchs 4 und ein Endgerät für ein System mit einer Zentrale und einer Vielzahl von über ein gemeinsames Medium von dieser Zentrale aus gleichzeitig zu betreibenden Endgeräten nach dem Oberbegriff des Anspruchs 5.

Die Erfindung geht aus von einem sogenannten HFC-System (HFC = hybrid fibre coax). Dies ist ein hybrides System im Endteilnehmerbereich, bei dem eine Vielzahl von Kabelmodems über ein gemeinsames Medium an eine Zentrale angeschlossen ist. Das Verteilsystem weist eine baumartige Struktur auf, wobei die von der Zentrale ausgehenden "Äste" durch Glasfaserkabel gebildet werden, während die "Zweige" zu den Endteilnehmern hin durch Koaxialkabel gebildet werden. Das hier vorliegende Problem kann aber auch bei andersartigen Systemen gemäß dem Oberbegriff des Hauptanspruchs auftreten und durch die hier vorgestellte Lösung gelöst werden.

Bei dem genannten System belegt ein angeschlossenes und eingeschaltetes Kabelmodem als Endgerät auch dann Übertragungskapazität, wenn es nicht verwendet wird. Ein nicht angeschlossenes oder nicht eingeschaltetes Kabelmodem dagegen kann auch nicht empfangen.

Der Erfindung liegt die Aufgabe zugrunde, ein Verfahren und die zur Ausführung des Verfahrens erforderlichen Mittel anzugeben, bei denen trotz beschränkter Gesamtkapazität eine große Zahl von Endgeräten angeschlossen und auch ständig betriebsbereit ist.

Diese Aufgabe wird erfindungsgemäß gelöst durch ein Verfahren nach der Lehre des Anspruchs 1, ein System nach der Lehre des Anspruchs 3, eine Zentrale nach der Lehre des Anspruchs 4 und ein Endgerät nach der Lehre des Anspruchs 5.

Der Erfindung liegt der Gedanke zugrunde, zwar immer zwischen der Zentrale und allen Endgeräten eine Verbindung als existent anzusehen, im Ruhezustand aber die Kapazität Null zu vereinbaren und einzustellen.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:

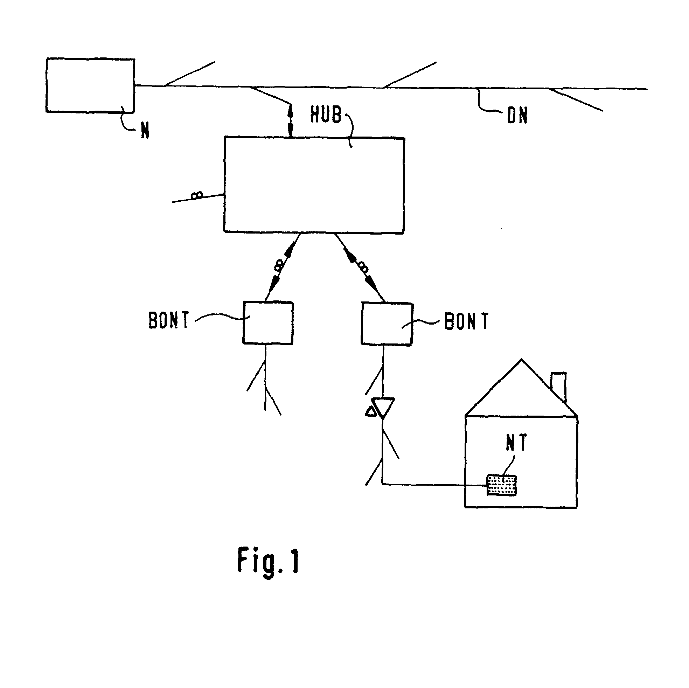

- Figur 1: zeigt ein erfindungsgemäßes System mit einer erfindungsgemäßen Zentrale und erfindungsgemäßen Endgeräten zur Durchführung des erfindungsgemäßen Verfahrens.

Anhand der Figur 1 wird zunächst ein System beschrieben, auf das sich die Erfindung bezieht:

Ausgehend von einem Netzknoten N ist zunächst ein sich verzweigendes Verteilnetz DN mit hoher Übertragungskapazität dargestellt. Daran angeschlossen sind eine Reihe von Unterknoten, von denen einer eingezeichnet und hier mit der hierfür in Fachkreisen oft üblichen Bezeichnung HUB versehen ist. Entweder der Netzknoten N oder der Unterknoten HUB können als Zentrale im Sinne der vorliegenden Erfindung ausgebildet sein. Zur Anbindung von Teilnehmereinrichtungen NT ist in diesem Beispiel ein hybrides Netz dargestellt. Vom Unterknoten HUB bis zu einem Verteiler BONT ist hier eine optische Faser verwendet. Vom Verteiler BONT bis zur Teilnehmereinrichtung NT ist ein Netz aus Koaxialkabeln mit darin für beide Richtungen enthaltenen Verstärkern vorgesehen. Als Teilnehmereinrichtung NT wird hier diejenige Einrichtung bezeichnet, die den teilnehmerseitigen Teil des erfindungsgemäßen Verfahrens durchführt. An sich ist dies in der Regel nicht das teilnehmerseitige Endgerät selbst, sondern eine teilnehmerseitige Netzabschlußeinheit, gelegentlich aber auch das Endgerät selbst mit darin eingebauter teilnehmerseitiger Netzabschlußeinheit (NT = Network Termination). Vereinfachend soll hier aber von einem Endgerät gesprochen werden. Der Verteiler BONT ist hier der Netzabschluß des (breitbandigen) optischen Netzes. Im Verteiler BONT erfolgt nur eine Umsetzung zwischen optischen und elektrischen Signalen.

Grundsätzlich erfolgt in der Richtung von den Teilnehmern zur Zentrale (Netzknoten N oder Unterknoten HUB) dasselbe wie in der Richtung von der Zentrale zu den Teilnehmern. Allerdings ist das Verkehrsaufkommen in der Richtung von der Zentrale zu den Teilnehmern in der Regel deutlich größer als in der Gegenrichtung. Dies soll auch durch die unterschiedliche Größe der in den Koaxialkabeln eingezeichneten Verstärker zum Ausdruck gebracht werden. Auch die Kapazität der Übertragungseinrichtungen ist darauf abgestimmt. Die Ursache liegt darin, daß die Teilnehmer wesentlich mehr Information abrufen als sie selbst ins Netz einspeisen. Informationsanbieter müssen auf andere Art angeschlossen sein.

Auf die verschiedenen Aufgaben des Netzknotens N und der Unterknoten HUB soll hier nicht näher eingegangen werden. Die Steuerung erfolgt grundsätzlich vom Netz aus, d. h., vom Netzknoten N oder vom Unterknoten HUB. Nur der Auslöser dazu, beispielsweise für einen Verbindungsaufbau oder Verbindungsabbau, erfolgt vom Endgerät her, sofern nicht die Gegenstelle und damit wieder das Netz der Auslöser ist.

Sobald nun ein Endgerät betriebsfähig angeschlossen und bei der Zentrale registriert ist, wird es von der Zentrale verwaltet und erhält damit zwangsläufig auch einen Übertragungskanal zugewiesen. Wie diese Registrierung bei der Zentrale erfolgt, ist dabei zweitrangig; denkbar ist hier sowohl eine manuelle Eintragung als auch eine automatische Erfassung, die sowohl laufend die Betriebsbereitschaft registrierter Endgeräte als auch das Hinzukommen bisher nicht betriebsbereiter Endgeräte erfaßt. Bei bekannten Systemen wird bei der Registrierung ein Übertragungskanal mit der für das registrierte Endgerät erforderlichen Übertragungskapazität mit registriert und damit auch bereitgestellt und zugewiesen.

Gemäß der Erfindung wird nun zu jedem Übertragungskanal auch eine Übertragungskapazität mit registriert, wodurch dann auch die Möglichkeit besteht, die Übertragungskapazität Null zu registrieren. Diese Möglichkeit wird dann aber grundsätzlich auch wahrgenommen. Sowohl bei der Registrierung eines Endgeräts als auch nach Beendigung einer Verbindung wird deshalb die Übertragungskapazität auf Null gesetzt.

Je nach Art des Endgeräts kann dann, abhängig vom konkreten Einsatzfall, die Übertragungskapazität für jede Einzelverbindung individuell eingestellt werden; sie kann selbst während der Verbindung geändert werden. Bei einer Faxübertragung beispielsweise kann die Übertragungskapazität abhängig von dem jeweils am anderen Ende beteiligten Gerät eingestellt werden; nach Abschluß der Übertragung eines Dokuments kann während der anschließenden Überprüfungs- und Bestätigungsphase die Übertragungskapazität auf einen geringeren Wert zurückgestellt werden. Da in einem solchen Anschlußnetz zumindest insgesamt die benötigte Übertragungskapazität für die beiden Richtungen ungleich ist, kann es auch Sinn machen, die Übertragungskapazität während der Verbindung richtungsweise umzuschalten.

Das System und seine Komponenten müssen hierzu geeignet ausgestaltet sein. Insbesondere muß vorgesehen sein, daß die Übertragungskapazität umschaltbar, insbesondere auf Null einstellbar ist. Weiter muß gewährleistet sein, daß eine Außerbandsignalisierung möglich ist, so daß auch dann, wenn die Übertragungskapazität des Übertragungskanals auf Null eingestellt ist, diese wieder geändert werden kann. Die hierfür erforderlichen Mittel und Verfahrensschritte sind aber an sich bekannt.

## Patentansprüche

1. Verfahren zum Betreiben eines Systems mit einer Zentrale und einer Vielzahl von über ein gemeinsames Medium von dieser Zentrale aus gleichzeitig zu betreibenden Endgeräten, **dadurch gekennzeichnet, daß** jedes betriebsbereite Endgerät von der Zentrale aus regelmäßig auf einem Dienstkanal abgefragt wird, ob ein Verbindungswunsch vorliegt, daß bei Vorliegen eines Verbindungswunsches diesem Endgerät ein Übertragungskanal mit einer diesem Verbindungswunsch entsprechenden Übertragungskapazität zugewiesen wird und daß bei Beendigung der Verbindung die Übertragungskapazität für dieses Endgerät auf Null gesetzt wird.

2. Verfahren nach Anspruch 1, dadurch gekennzeichnet, daß die Übertragungskapazität eines Übertragungskanals während einer Verbindung geändert werden kann.

3. System mit einer Zentrale und einer Vielzahl von über ein gemeinsames Medium von dieser Zentrale aus gleichzeitig zu betreibenden Endgeräten, **dadurch gekennzeichnet, daß** das System Mittel aufweist, um von der Zentrale aus regelmäßig auf einem Dienstkanal abzufragen, ob ein Verbindungswunsch vorliegt, daß das System Mittel aufweist, um bei Vorliegen eines Verbindungswunsches dem betroffenen Endgerät einen Übertragungskanal mit einer diesem Verbindungswunsch entsprechenden Übertragungskapazität zuzuweisen und daß das System Mittel aufweist, um bei Beendigung der Verbindung die Übertragungskapazität für dieses Endgerät auf Null zu setzen.

4. Zentrale für ein System mit einer Zentrale und einer Vielzahl von über ein gemeinsames Medium von dieser Zentrale aus gleichzeitig zu betreibenden Endgeräten, **dadurch gekennzeichnet, daß** die Zentrale Mittel aufweist, um regelmäßig alle betriebsbereiten Endgeräte auf einem Dienstkanal abzufragen, ob ein Verbindungswunsch vorliegt, daß die Zentrale Mittel aufweist, um bei Vorliegen eines Verbindungswunsches dem betroffenen Endgerät einen Übertragungskanal mit einer diesem Verbindungswunsch entsprechenden Übertragungskapazität zuzuweisen und daß die Zentrale Mittel aufweist, um bei Beendigung der Verbindung die Übertragungskapazität für dieses Endgerät auf Null zu setzen.

5. Endgerät für ein System mit einer Zentrale und einer Vielzahl von über ein gemeinsames Medium von dieser Zentrale aus gleichzeitig zu betreibenden Endgeräten, **dadurch gekennzeichnet, daß** das Endgerät Mittel aufweist, um auf eine Abfrage von der Zentrale hin zu melden, ob ein Verbindungswunsch vorliegt und daß das Endgerät Mittel aufweist, um die Zuweisung eines Übertragungskanals zu erkennen und sich auf diesen Übertragungskanal einzustellen.

6. Endgerät nach Anspruch 5, dadurch gekennzeichnet, daß das Endgerät weiter Mittel aufweist, um auch die für einen vorliegenden Verbindungswunsch erforderliche Übertragungskapazität an die Zentrale zu melden und daß das Endgerät weiter Mittel aufweist, um sich auf eine zugewiesene Übertragungskapazität einzustellen.
